# EUROPEAN PATENT SPECIFICATION

(11) **EP 2 347 380 B1**
(45) Date of publication and mention of the grant of the patent: **25.02.2015**
(21) Application number: 09777427.7
(22) Date of filing: 24.07.2009
(51) Int. Cl.: G06F 17/30, G06Q 30/02, H04M 3/22, H04M 3/493, H04W 4/02

(54) **CONTROLLING TRANSMISSION OF A CONTENT ITEM TO A USER TERMINAL BY INDEPENDENTLY TRANSMITTING ADDITIONAL CONTENT TO THE USER TERMINAL**
STEUERN DER ÜBERTRAGUNG EINES INHALTSPOSTENS ZU EINEM BENUTZERENDGERÄT DURCH UNABHÄNGIGES ÜBERTRAGEN VON ZUSÄTZLICHEM INHALT ZU DEM BENUTZERENDGERÄT
COMMANDE DE TRANSMISSION D'UN ARTICLE DE CONTENU À UN TERMINAL D'UTILISATEUR EN TRANSMETTANT DE MANIÈRE INDÉPENDANTE UN CONTENU SUPPLÉMENTAIRE AU TERMINAL D'UTILISATEUR

(30) Priority: 24.09.2008 WO PCT/EP2008/062799; 07.11.2008 WO PCT/EP2008/009431
(43) Date of publication of application: 27.07.2011
(73) Proprietor: Telefonaktiebolaget LM Ericsson (publ), 164 83 Stockholm (SE)
(72) Inventor: QUINN, Karl, Dublin, D14 (IE); CLEARY, David, Athlone (IE)
(74) Representative: Egrelius, Fredrik
(86) International application number: PCT/EP2009/005390
(87) International publication number: WO 2010/034371

(56) References cited:
- EP-A- 1 220 132
- EP-A- 2 015 530
- EP-A- 2 034 678
- US-A1- 2007 066 365
- US-A1- 2007 088 851

## Description

### Technical Field

The invention relates to techniques for a delivery of content items, e.g. SMS (Short Message Service) messages and MMS (Multimedia Message Service) messages, in a mobile communications network, wherein the content items are associated with further content items, e.g. advertisements.

### Background

Services such as a SMS or MMS are operable in mobile communications networks for delivering pieces of content to user terminals, i.e. typically to mobile phones but also to stationary terminals such as appropriately configured personal computers. The piece of content is a text message in case of SMS, possibly enriched with multimedia data such as an image or audio file in case of MMS. Such pieces of content will generally be referred to as 'content items' hereinafter, wherein this term is to be understood as being independent of a particular delivery service. For example, an email service also delivers content items such as text messages or multimedia messages to user terminals.

Referring exemplarily to an SMS service, such service is typically implemented in a mobile communications network by dedicated functional entities such as an SMS gateway, for example an IP-SM-GW (Internet Protocol Short Message Gateway), an SMS-GMSC / SMS-IWMSC (SMS-Gateway/Interworking MSC), and further entities. As such infrastructure is known to the person of skill in this field, it will only be referred to as the 'SMS gateway' hereinafter for short. Generally, the SMS gateway operates to receive an SMS or MMS message from a source user terminal and to forward the message to a destination user terminal.

Services such as SMS/MMS services but also email services may be configured as added-value services, for example by additionally providing advertisements, news or announcements to the users. This allows more flexible business models; for example, SMS/MMS services may become cheaper for the users when the costs are covered at least partly by advertisement revenues. For simple added-value service models, no essential modifications at the network infrastructure are required. For example, SMS/MMS advertising may comprise sending additional advertisement messages to the users. Normally, such message includes an offer for a product or a subscription service. Instructions may be included for the subscriber to ring a number, send a text to a short code number, or visit a webpage via a given Internet link.

More sophisticated techniques may comprise that primary content, such as an SMS message or similar content item, is augmented by secondary content such as an advertisement, i.e. both the primary and the secondary content is presented in parallel to the user. For example, an advertisement may be appended to a message. Such techniques require a technical infrastructure for appropriately processing, e.g., SMS messages.

US 2008/0243619 A1 describes a technique for combining SMS messages with advertising messages in a wireless communication system. An SMS center includes an SMS message processing module that determines whether an SMS message should be modified to include advertisements. If yes, a selection process comprises that keywords of the original message are determined and an appropriate advertisement is selected based on the keywords. The original message is then modified to include the selected text advertisement before forwarding it to the destination.

According to this technique the provision of an added-value SMS service is handled in the SMS gateway. Thus, for the introduction of a new service the relevant data has to be provided to the SMS gateway and several processing facilities therein have to be modified accordingly. This makes the introduction of new services complex and cumbersome. It is to be noted in this respect that SMS/MMS messages are normally handled by signalling nodes (as opposed to nodes involved in user data transport). Thus, the introduction of more and more sophisticated services leads to the SMS gateway becoming more and more complex, difficult to administer, and error-prone, and the forwarding of SMS/MMS messages may be delayed.

Similarly to the above referred patent application, patent applications EP 2 015 530, EP 1 220 132 and EP 2 034 678, also describe systems involving the interception and modification (by, for example, introducing additional content such as advertisements) of messages prior to the transmission to the recipient.

A different alternative is described in patent application US 2007/0088851, in particular in the embodiment of fig.7, which describes a system where the message is received and modified by the recipient terminal, based on an advertisement being downloaded after the message's reception.

### Summary

There is a demand for a technique, and thus components enabling the technique, for a delivery of content items such as SMS/MMS messages in mobile communications networks which enables more flexibility for the introduction of corresponding services.

This demand is satisfied by a method for controlling a transmission of a first content item to a user terminal via a mobile communications network. The method is performed in a content provisioning server of the mobile communications network, and is defined by the wording of claim 1.

For all methods and devices outlined here, the first content item may be related to at least one of an SMS service, MMS service, email service and IP Multimedia Subsystem (IMS) service of the mobile communications network. For example, the first content item may be an SMS or MMS message.

The second content item may comprise content such as text data, image data or any kind of multimedia data. The second content item may additionally or alternatively indicate a link or a phone number. In some realizations, the second content item may also comprise an additional SMS, MMS, or email.

The user terminal may be a mobile terminal adapted for communication via the mobile communications network. For example, the mobile communications network may be a Universal Mobile Telecommunication System (UMTS) or Long Term Evolution (LTE) network, which may or may not be used together with an IMS core network and IMS services, and the user terminal may be a User Equipment (UE) adapted for communication therewith. In some implementations the user terminal is a stationary terminal such as a stationary phone adapted for reception/transmission of SMS/MMS. Such stationary phone may, for example, be a personal computer equipped with appropriate software and/or hardware, e.g. an embedded or external (in the form of a stick, data card or dongle) UMTS or LTE radio communications circuit. The stationary terminal may in this context also be a Connected Home Gateway connected to a TV screen.

The content provisioning server may be co-located with an SMS/MMS gateway. In some variants, both server and gateway may be implemented on a common hardware platform. In other implementations, the content provisioning server may be located remotely from the SMS/MMS gateway or center. For example, the content provisioning server may be co-located with a Gateway GPRS Support Node (GGSN) or a Mobility Management Entity (MME), or may be located in a Radio Access Network.

The step of transmitting the second content item may be performed independently of a transmission of the first content item in the mobile communications network. For example, the transmission of an SMS or MMS may be controlled by an SMS/MMS gateway, while the transmission of the second content item may be separately controlled by the content provisioning server.

The step of receiving the content indicator may comprise receiving an item identifier identifying the first content item. In this implementation the step of transmitting the second content item may comprise transmitting the item identifier in association with the second content item. The item identifier may be used in the user terminal to associate the independently received first and second content items with each other.

In some variants, the second content item may be determined based on a geographical location of the user terminal. For example, content items processed by the content provisioning server may have an intended presentation area. Then the second content item may be determined based on if an intended presentation area of a content item covers the location of the mobile terminal.

The above demand is also satisfied by a further method for controlling a transmission of a first content item to a user terminal via a mobile communications network. This method is performed in a content analysis entity of the mobile communications network, and is defined by the wording of claim 6.

The content analysis entity may be co-located with an SMS/MMS gateway or both may be implemented on a common hardware platform. In other implementations, the content analysis entity may be located remotely from the SMS/MMS gateway and may, for example, be implemented with the content provisioning server described above.

The data received by the content analysis entity may comprise at least one of a copy of content of the first content item and the content itself. For example, the data may represent an SMS text or a copy thereof. The determination step may comprise parsing a text representing content of the first content item. The content indicator may comprise one or more keywords representing content of the first content item.

Outside the scope of the invention, herein is also described a third method for controlling a transmission of a first content item to a user terminal via a mobile communications network. This method is performed in a user terminal and comprises the steps of receiving the first content item from the mobile communications network; receiving a second content item from the mobile communications network, wherein the second content item is intended for an associated presentation with the first content item on the user terminal and the reception of the second content item is independent of the reception of the first content item; and presenting the second content item in association with the first content item.

The step of receiving the second content item may comprise receiving an item identifier related to the first content item. According to this variant, the step of presenting both content items may be performed based on the item identifier. In some implementations, the second content item is presented in-line with the first content item. For example, the second content item may be a link which is added to or replaces a content of the first content item such as a word of an SMS text.

Moreover, the above-mentioned demand is satisfied by computer programs having computer executable instructions according to claims 12 and 13.

Additionally, a computer program product comprising a computer readable medium and any of the computer programs is provided, wherein the computer program is stored on the computer readable medium. The computer readable medium can take the form of a Read-Only Memory (ROM), CD-ROM, DVD, flash memory, Electronically Erasable Programmable ROM (EEPROM) hard disk or any other known non-volatile memory.

Moreover, the above-discussed demand is satisfied by a content provisioning server of a mobile communications network adapted for controlling a transmission of a first content item to a user terminal, and defined by the wording of claim 15.

Additionally, the above demand is satisfied by a content analysis entity of a mobile communications network adapted for controlling a transmission of a first content item to a user terminal, and defined by the wording of claim 17.

The above demand is also satisfied by a node of a mobile communications network, which comprises a content provisioning server as outlined above and a content analysis entity as outlined above.

Also, the above demand is satisfied by a mobile communications network comprising a first node implementing a content provisioning server as outlined above and a second node implementing a content analysis entity as outlined above, wherein the first node and the second node are remote to each other.

Outside the scope of the invention, herein is also described a user terminal associated with a mobile communications network adapted for controlling a transmission of a first content item to the user terminal. The user terminal comprises a component adapted to receive the first content item from the mobile communications network; a component adapted to receive a second content item from the mobile communications network, wherein the second content item is intended for an associated presentation with the first content item on the user terminal and the reception of the second content item is independent of the reception of the first content item; and a component adapted to present the second content item in association with the first content item.

The content provisioning server, content analysis entity and user terminal may be adapted, or configured, to perform the various method steps described herein. To this end, appropriately configured components may be provided.

### Brief Description of the Drawings

In the following, the invention will further be described with reference to exemplary embodiments illustrated in the figures, in which:
- Fig. 1: schematically illustrates an embodiment of a mobile communications network adapted for a provisioning of content items such as SMS messages;
- Figs. 2A and 2B: illustrate two embodiments of the SMS analysis entity of the mobile communications network of Fig. 1;
- Fig. 3: is a flow diagram schematically illustrating an operation of the SMS analysis entity of Fig. 2;
- Figs. 4A and 4B: illustrate two embodiments of the content provisioning server of the mobile communications network of Fig. 1;
- Fig. 5: is a flow diagram schematically illustrating an operation of the content provisioning server of Fig. 4;
- Fig. 6: illustrates a further embodiment of a mobile communications network;
- Figs. 7A and 7B: illustrate two embodiments of the user terminal of Fig. 1;
- Fig. 8: is a flow diagram schematically illustrating an operation of the user terminal of Fig. 8; and
- Fig. 9: illustrates a presentation of an SMS with augmenting content on a screen of the user terminal of Fig. 7.

### Detailed Description

In the following description, for purposes of explanation and not limitation, specific details are set forth with regard to advertisement provisioning systems in mobile communications networks in order to provide a thorough understanding of the current invention. It will be apparent to one skilled in the art that the current invention may be practiced in other embodiments that depart from these specific aspects. For example, the skilled artisan will appreciate that the current invention may be implemented for any service including content augmentation, for example by adding news, announcements or offerings.

Further, while in the examples below an SMS service is described, the techniques proposed herein may be implemented with many other services including MMS services, email services and in general any kind of service related to content provisioning to user terminals.

Those skilled in the art will further appreciate that functions explained hereinbelow may be implemented using individual hardware circuitry, using software functioning in conjunction with a programmed microprocessor or a general purpose computer, using an application specific integrated circuit (ASIC) and/or using one or more digital signal processors (DSPs). It will also be appreciated that when the current invention is described as a method, it may also be embodied in a computer processor and a memory coupled to the processor, wherein the memory is encoded with one or more programs that perform the methods disclosed herein when executed by the processor.

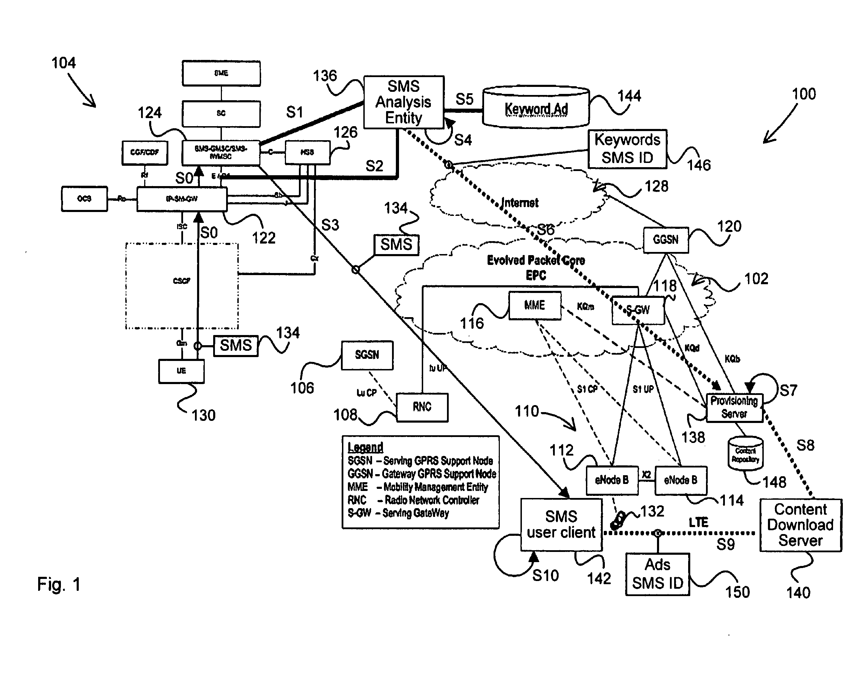

Fig. 1 illustrates an embodiment of a mobile communications network 100 including an Evolved Packet Core (EPC) network 102 and a network infrastructure 104 for the processing of SMS messages. The mobile communications network 100 further comprises a PS domain represented by Serving GPRS Support Node (SGSN) 106 and Radio Network Controller (RNC) 108, and a Radio Access Network (RAN) 110 represented by evolved eNodeBs 112 and 114. The EPC 100 comprises an MME 116, a Serving Gateway (S-GW) 118 and a GGSN 120. The network infrastructure 104 comprises an IP-SM-GW 122, an SMS-GMSC 124, a Home Subscriber Server (HSS) 126, as well as further components which are illustrated in Fig. 1 and known to the skilled person.

In the example illustrated in Fig. 1, the network infrastructure 104 and the EPC 102 are assumed to be separate from each other and a communication therebetween may be performed via an Internet area 128. Generally the network infrastructure 104 and the EPC 102 may form part of a single mobile communications network or may belong to different networks, which may, e.g., be operated by different mobile network operators.

As exemplary implementations of user terminals, User Equipments (UEs) 130 and 132 are illustrated. The UEs 130 and 132 are adapted for communication with the mobile communications network 100. In the following it is assumed that an SMS message 134 is sent from UE 130 towards UE 132, wherein the SMS service provided by the mobile communications network 100 comprises augmenting the SMS message 134 with one or more advertisements. For this purpose, the mobile communications network 100 includes a content analysis entity 136 in the form of an SMS analysis entity, a content provisioning server 138, and a content download server 140. The UE 132 comprises an SMS user client 142 adapted for communication with the content download server 140. The operation and interworking of these entities will firstly be outlined with reference to the scenario illustrated in Fig. 1, and will then be described in more detail with reference to the subsequent figures.

In a step S0 schematically indicated in Fig. 1, the SMS message 134 is sent from the UE 130 to the IP-SM-GW 122 and further to the SMS-GMSC 124. In step S1, the SMS-GMSC 124 forwards the SMS message 134 to the SMS analysis entity 136. In step S2, the SMS analysis entity 136 returns the SMS message 134 back to the network infrastructure 104, which operates in step S3 to provide the SMS message 134 to the SMS user client 142 on UE 132. In other embodiments, the SMS analysis entity may receive a copy of the content of SMS message 134, such that step S2 can be omitted. The purpose of routing the SMS message 134 over the SMS analysis entity as illustrated in Fig. 1 will be discussed below.

In step S4, the SMS analysis entity operates to parse the received SMS text and to correlate the words and phrases of the SMS text with keywords and phrases in a keyword database 144. As a result of this operation, the SMS analysis entity provides in step S6 one or more keywords matching with words in the parsed SMS text to the provisioning server 138 in a message 146.

In step S7, the content provisioning server 138 operates to identify one or more appropriate advertisements based on the keyword(s) received from the SMS analysis entity. In this respect, the content provisioning server 138 accesses a content repository 148 provided for storing advertisements and data associated therewith. For example, keywords may be stored in association with ads in the repository 148, wherein these keywords may be used as a basis for identifying appropriate advertisements by matching these keywords with the keyword(s) received in the message 146.

In step S8, the content provisioning server 138 provides the identified one or more ads 150 to the content download server 140 which operates in step S9 to provide the ads 150 to the UE SMS client 142. In step S10, the SMS user client 142 presents the SMS message 134 received in step S3 and the advertisements 150 received in step S9 in association with each other to a user of UE 132. It is noted in this respect, that the transmission of the SMS message 134 in step S3 on the one hand, and the transmission of the message 146 in step S6 and of the accordingly selected ads 150 in steps S8 and S9 on the other hand are entirely separate transmissions, i.e. these transmissions are conducted independently of each other as opposed to a single transmission of an SMS message with an already appended advertisement to a recipient.

Now, the operation of the various entities and nodes of Fig. 1 is illustrated in more detail with reference to the subsequent figures.

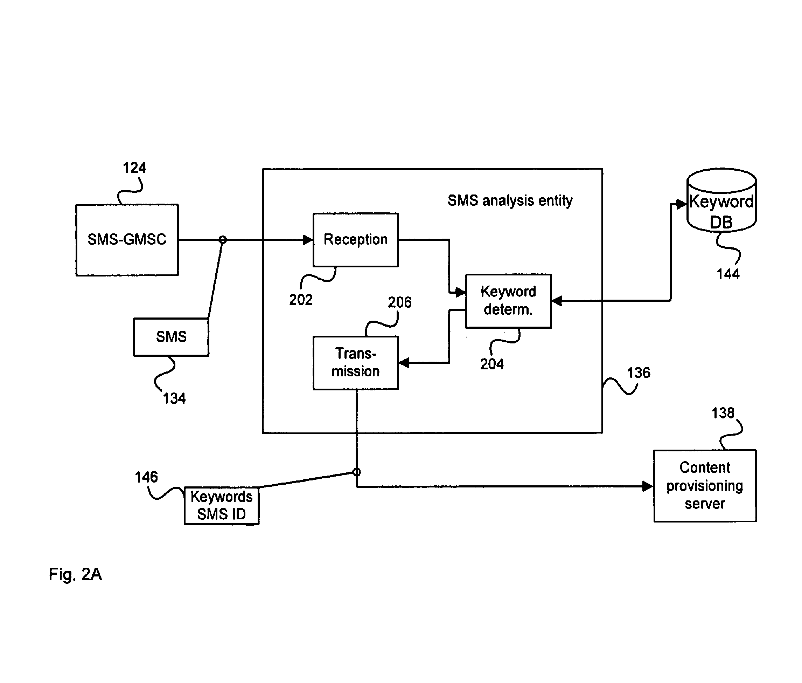

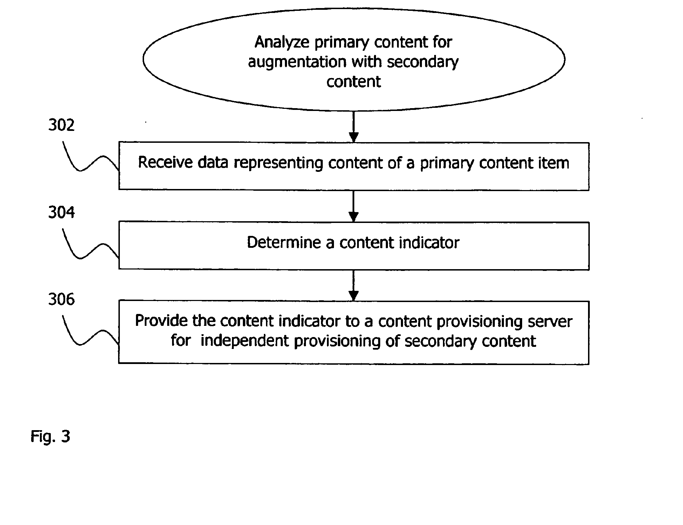

Fig. 2A illustrates functional components of an embodiment of the content analysis entity 136 in the form of the SMS analysis entity of Fig. 1. The SMS analysis entity in Fig. 2A comprises a reception component 202, a keyword determination component 204, and a transmission component 206. An operation of the SMS analysis entity of Fig. 2A is now described with reference to the flow diagram of Fig. 3. Generally, the SMS analysis entity operates to analyze content, specifically SMS message texts, in view of an augmentation of such primary content with secondary content, i.e. advertisements in the example discussed here.

In step 302, the reception component 202 receives data representing content of a first content item. Specifically with reference to step S1 of the example scenario of Fig. 1, the reception component 202 receives as data the SMS message 134. In other embodiments, the data may comprise a copy of at least a part of a content item such as an SMS message text.

In step 304 (corresponding to step S4), the determination component 204 operates to determine, based on the received data, a content indicator which is indicative of the content of the first content item. The step 304 may comprise to identify one or more keywords indicative of aspects of the data received by the reception component 202. Specifically with regard to the SMS message 134, the operation of the determination component 204 comprises to identify one or more keywords characterizing the text of the SMS message 134. In this respect, the determination component 204 accesses (step S5 in Fig. 1) the keyword database 144 in order to identify keywords stored therein matching with words or phrases of the SMS text. Additionally or alternatively to one or more keywords identified in this way, the content indicator may comprise keywords related to the mobile communications network 100 (e.g., one or more operators thereof) 100 of Fig. 1, the current time (daytime/nighttime, weekend, holidays, seasons, etc.), the users of the user terminals 130, 132 (gender, age, language preference ...), etc.

In step 306 (step S5), the transmission component 206 provides the determined content indicator to the content provisioning server 138. The content indicator may comprise, along with the one or more identified keywords, an SMS identifier (SMS ID for short below) which is intended to allow the SMS user client 142 associating the SMS message 134 with the advertisements 150 for presentation. The SMS ID may comprise, for example, one or more of an originating number (of UE 130), a terminating number (of UE 132), a time stamp, and an arbitrary identification number which allows at least the SMS user client 142 to uniquely identify the SMS message 134.

No synchronization is required between the sending of the SMS message 134 towards UE 132 in step S3 of Fig. 1 and the forwarding of the keyword(s) and the SMS identifier in step 306, as the ads 150 are transmitted independently of the SMS 134 towards the UE 132. Thus, the transmission component 206 may send the message 146 to the content provisioning server 138 as soon as keyword(s) and SMS identifier are available. As illustrated in Fig. 1, the transmission paths of the SMS message 134 and the keyword message 146 may be at least partly separate from each other.

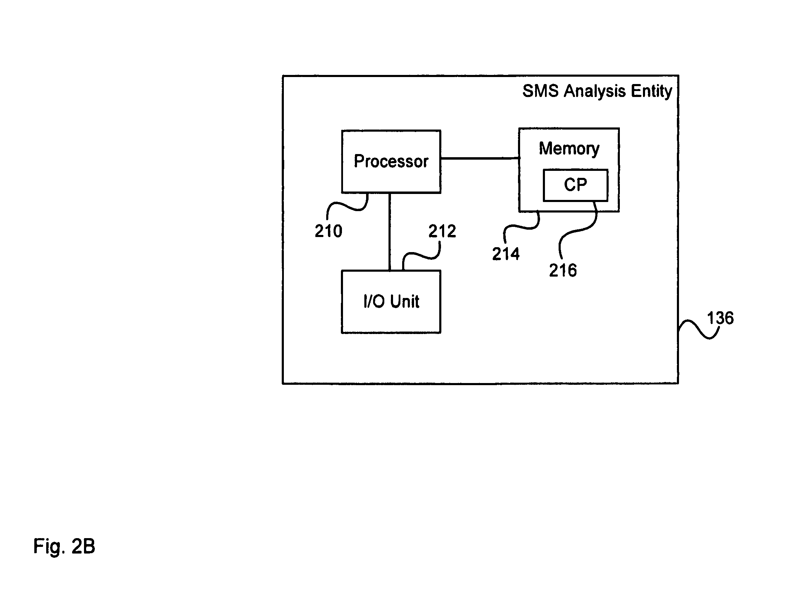

Fig. 2B illustrates functional components of a further embodiment of a content analysis entity 136 in the form of the SMS analysis entity of Fig. 1. The content analysis entity 136 in Fig. 2B comprises a processor 210, an input/output unit (such as a keyboard/monitor combination) 212, a computer program product 214 in the form of a memory, e.g., a hard disk, ROM, flash memory, or EEPROM, and a computer program 216 stored therein. The computer program 216 comprises suitably programmed program modules corresponding to the functional components 202, 204 and 206 discussed above with reference to Fig. 2A. The computer program 216 causes the processor 210 to perform the steps illustrated in the flow diagram of Fig. 3.

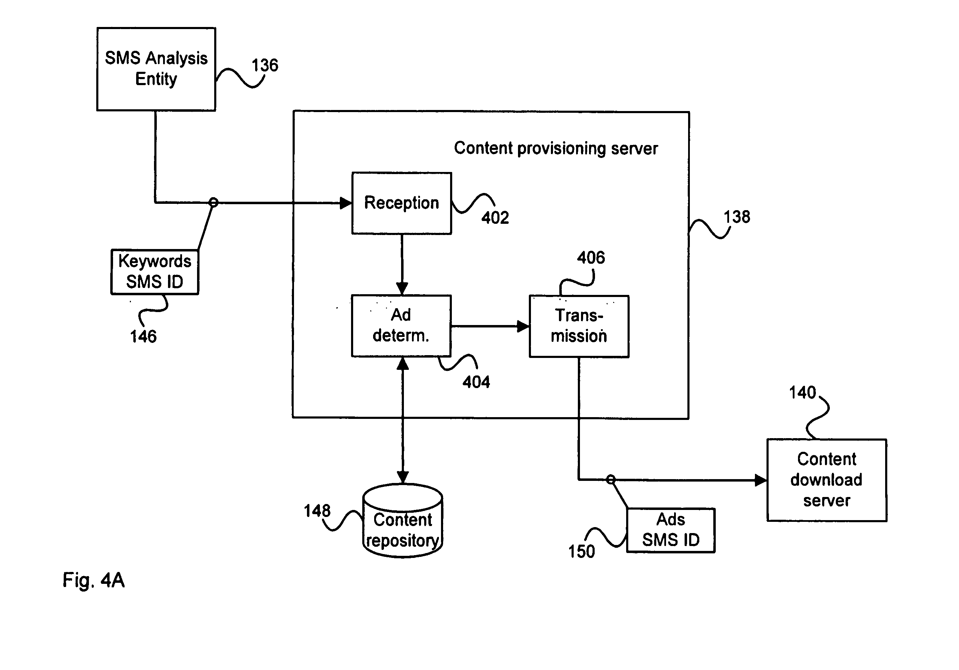

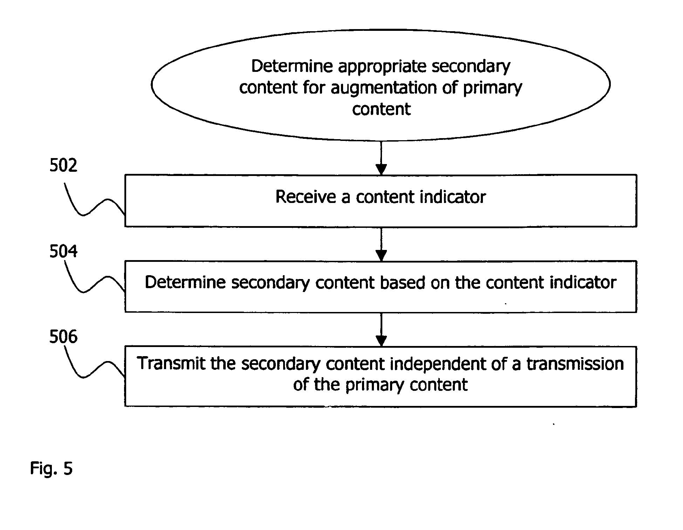

Fig. 4A schematically illustrates functional components of an embodiment of the content provisioning server 138 of Fig. 1. The content provisioning server 138 in Fig. 4A comprises a reception component 402, an advertisment determination component 404 and a transmission component 406. An operation of the content provisioning server 138 will now be described with reference to the flow diagram of Fig. 5. Generally, the content provisioning server 138 acts as an 'ad injection point', i.e. (specifically for the example scenario discussed here) operates to identify one or more appropriate advertisements augmenting the SMS message 134 and to transmit the identified advertisments towards UE 132 via a transmission path independent of the transmission path of the SMS message 134.

In step 502 (step S6 of Fig. 1), the reception component 402 receives message 146 from the SMS analysis entity including the content indicator indicative of content of the SMS message 134 and the SMS ID. In step 504, the advertisement determination component 404 determines one or more advertisements based on the content indicator. Specifically, the advertisement determination component 404 accesses content repository 148, which generally stores secondary content for augmentation of primary content such as SMS texts. Specifically with regard to the example discussed here, the content repository 148 stores available advertisements in association with further data allowing a determination of whether an advertisement may appropriately being served to a user. For example, keywords may be associated with advertisements. The advertisement determination component 404 then identifies one or more appropriate advertisements by identifying those advertisments associated with at least one of the keywords received in message 146.

The content repository 148 and the keyword database 144 may be similarly configured. For example, a list of keywords available for being associated with advertisements stored in the content repository 148 may be identical to the list of keywords stored in the keyword database 144. As a concrete example, a keyword contained in both databases may be "flight". The identification of this word as a keyword in the SMS analysis entity 136 enables the content provisioning server 138 to identify in the content repository 148 advertisements associated with the word "flight", e.g. advertisements of airline companies.

The data associated with ads in the content repository 148 may further comprise, for example, an intended presentation area for an advertisement. For example, some advertisements may have no specific presentation area and may thus be presented to users in any geographical area. Other advertisements may have a specific intended presentation area such as a particular city or cities, or a region, province, etc. The content provisioning server 138 may retrieve a current geographical location of UE 132, e.g. from the MME 116. The ad determination component 404 may then determine those advertisements whose intended presentation area covers the location of UE 132. In this way, in addition or alternatively to globally relevant advertisments ('macro-localized' ads), also advertisements relevant in a local area ('micro-localized' ads) can be served to UE 132.

Advertisements may be classified as macro-localized or micro-localized (and also a more complex classification scheme may be used) depending on the concrete conditions for the content augmentation. Accordingly, a macro-localized presentation area may be a country or such-like region, while a micro-localized presentation area may be a province, city, town, or postal code. Advertisements with an unlimited presentation area may also be classified as macro-localized.

In some embodiments the content provisioning server 138 may access multiple content repositories. For example, macro-localized advertisements may be stored in a central repository in a mobile communications network, while micro-localized advertisements may be stored in content repositories which are associated with regional access networks, such as this is shown in Fig. 1 for the content repository 148 which can be seen as being associated with the RAN 110, the MME 116, and/or the GGSN 120, respectively.

In step 506, the transmission component 406 operates to transmit the determined one or more advertisements towards UE 132, which comprises in the example discussed here to provide the advertisements to the content download server 140. At the same time, the content provisioning server 138 may mark the advertisements in the content repository as 'served'.

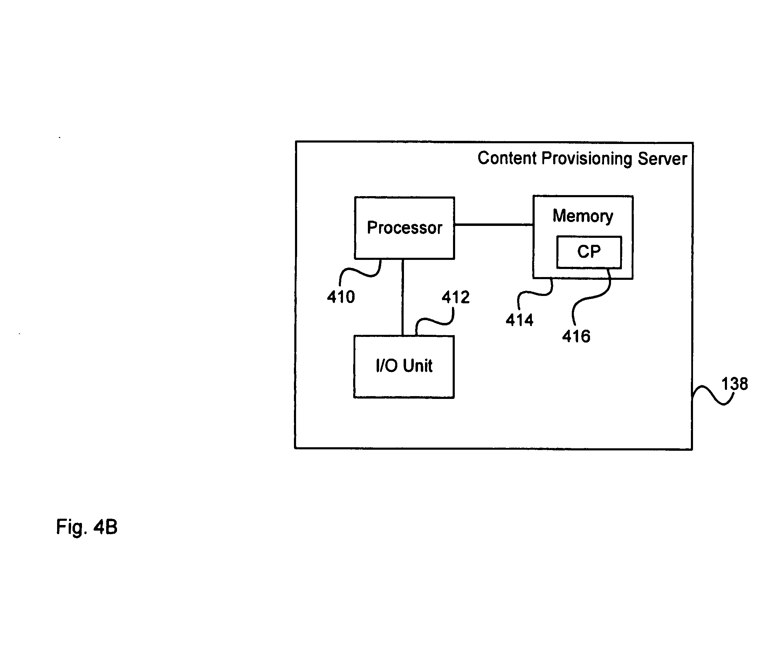

Fig. 4B illustrates functional components of a further embodiment of the content provisioning server 138 of Fig. 1. The content provisioning server 138 in Fig. 4B comprises a processor 410, an input/output unit (such as a keyboard/monitor combination) 412, a computer program product 414 in the form of a memory, e.g., a hard disk, ROM, flash memory, or EEPROM, and a computer program 416 stored therein. The computer program 416 comprises suitably programmed program modules corresponding to the functional components 402, 404 and 406 discussed above with reference to Fig. 4A. The computer program 416 causes the processor 410 to perform the steps illustrated in the flow diagram of Fig. 5.

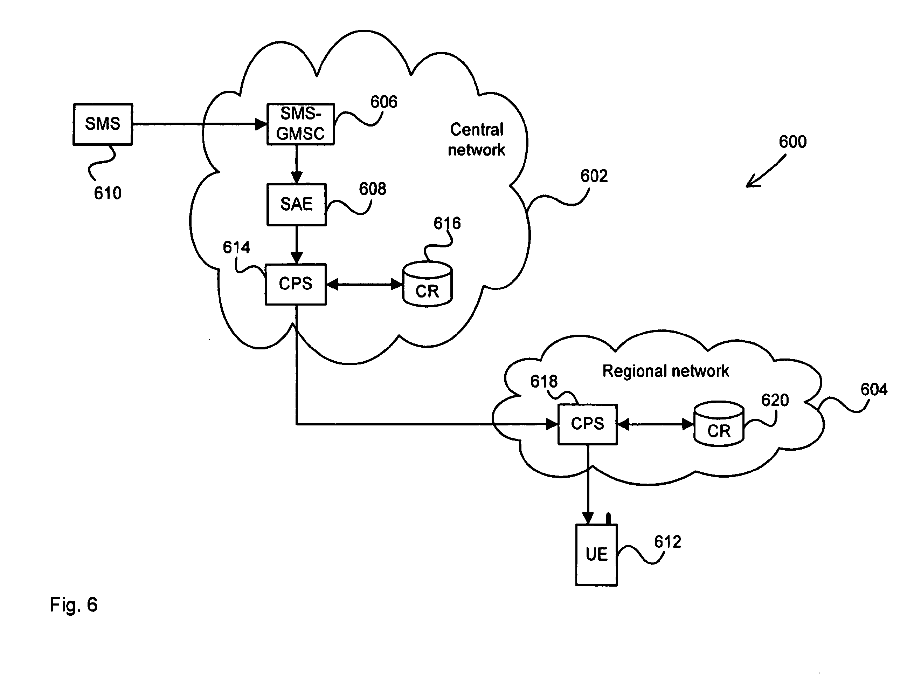

Fig. 6 illustrates schematically a further embodiment of a mobile communications network 600 which is slightly different from the network 100 illustrated in Fig. 1. The network 600 comprises a central network 602 and a regional network 604. The central network 602 is adapted for SMS handling and therefore comprises an SMS-GMSC 606 and an SMS analysis entity (SAE) 608, which may operate similarly to what has been described for the SMS-GMSC 124 and SMS analysis entity above. The regional network 604 may comprise a RAN and/or an EPC similar to RAN 110 and EPC 102, respectively, of Fig. 1.

The mobile communications network 600 operates to serve primary content in the form of an SMS 610 to a UE 612 and to augment this primary content by providing additional secondary content such as one or more advertisements to the UE 612. The mobile communications network 600 may operate similarly to what has been described for the mobile communications network 100 so far, but the network 600 differs from the network 100 in that there are multiple content provisioning servers and multiple content repositories; specifically, the central network 602 comprises a central content provisioning server (CPS) 614 and a central content repository (CR) 616, and the regional network 604 comprises a regional content provisioning server 618 and a regional content repository 620.

A network topology such as that illustrated in Fig. 6 may be chosen to serve macro-localized and micro-localized advertisements to the UE 612. The central content repository 616 may be provided for storing macro-localized advertisements, i.e. the intended presentation area of such ads is either the entire network 600 or several regional networks such as the regional network 604. The regional content repository 620, on the other hand, is then provided for storing micro-localized advertisements with an intended presentation area of at most the coverage area of regional network 604 or less.

The central content provisioning server 614 receives keywords characterizing the content of SMS message 610 from the SMS analysis entity 608 and correspondingly identifies one or more macro-localized advertisements in the central content repository 616. Thereafter, the central provisioning server 614 forwards the keywords identified by the SMS analysis entity 608 and the macro-localized ads to the regional content provisioning server 618 which then operates to determine micro-localized ads from the regional content repository 620. A further task of the regional content provisioning server 618 may be to skip a macro-localized ad in case a micro-localized ad is available, for example a global company may have an ad which is generally served world-wide, but may prefer a different advertisement in a specific region. As a further option, the regional content provisioning.server 618 may operate to perform a ranking of all macro- and micro-localized advertisements. Eventually the one or more advertisements of highest rank, which could be macro-localized and/or micro-localized, are forwarded towards UE 612.

A large mobile communications network may comprise a central content provisioning server and central content repository such as illustrated with entities 614 and 616 in Fig. 6, and may further comprise multiple regional provisioning servers and regional content repositories such as illustrated by entities 618 and 620. In other embodiments, there may be a central content repository but no central content provisioning server. Multiple regional content provisioning servers would be configured to access regional content repositories containing micro-localized ads and to additionally access the central content repository for retrieving macro-localized ads. In still other embodiments, only a single content provisioning server is provided in a central network infrastructure, which access central and regional content repositories.

With regard to scenarios with a single content provisioning server and single content repository, a configuration different to that of Fig. 1 may comprise that both the content provisioning server and the content repository are located in a central network infrastructure. For example, the content provisioning server may be arranged near to an SMS analysis entity (e.g., co-located) and/or near to an SMS processing infrastructure such as the infrastructure 104 illustrated in Fig. 1. Then there would be no further provisioning server or content repository in regional access networks.

The various configurations discussed above may be chosen according to concrete requirements. For example, providing a content provisioning server and/or content repository in association with a regional core / radio access network may reduce response times and network load. The provisioning server and/or content repository may be co-located or otherwise associated with, e.g., an MME or a GGSN depending on further tasks. For example, in case the content repository is used to store advertisements or other secondary content not only for SMS/MMS, but also for a presentation in combination with webpages or other data to be retrieved from the Internet, a location of the provisioning server and/or content repository near to a GGSN as illustrated in Fig. 1 can be advantageous.

Another reason for arranging for a regional or local content provisioning server is in case the content provisioning server is to handle feedback data, e.g. process data indicating a user response to presented advertisements. For example, the content provisioning server may store indications of a number of users which have actually selected an advertisement with a micro-localized presentation area in order for a determination of a click-through rate. In order to reduce network traffic the content provisioning server may then be arranged near to the radio access.

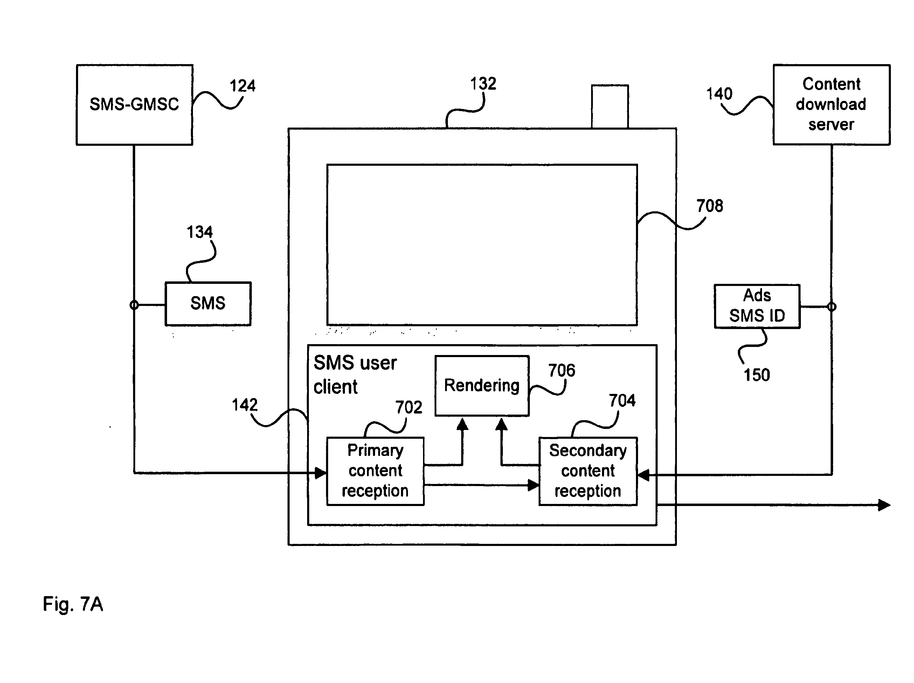

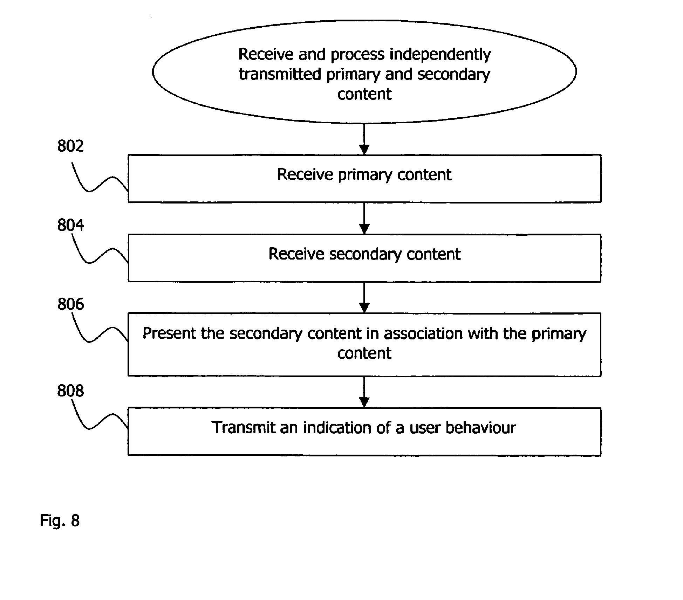

Fig. 7A schematically illustrates functional components of an embodiment of the UE 132 in Fig. 1. The UE 132 comprises the SMS user client 142, a primary content reception component 702, a secondary content reception component 704, a rendering component 706 and a screen 708. An operation of the UE 132 in Fig. 7A will now be described with reference to the flow diagram of Fig. 8. Generally, the UE 132 operates to receive and process primary content such as SMS messages together with secondary content for augmentation of the primary content, such as advertisements, wherein the primary content and secondary content are received independently of each other.

In step 802 (corresponding to step S3 of Fig. 1), the primary content reception component 702 operates to receive the SMS message 134 from the SMS-GMSC 124. In step 804 (step S9), the secondary content reception component 704 operates to receive from the content download server 140 the advertisements 150. The SMS message 134 on the one hand and the advertisements 150 on the other hand are received independently of each other, i.e. there is no strict correlation in time or otherwise between the receptions in steps 802 and 804. For example, the steps may occur in different order, such that the secondary content may be received before the primary content. However, referring to the example scenario discussed here, the secondary content reception component 704 may be triggered by the primary content reception component 702, i.e. the reception of the SMS 134 to request a download of available secondary content for augmentation of the primary content from the content download server 140.

In step 806, the rendering component 706 operates to present the received SMS 134 as well as the advertisements 150 in association with each other to a user of the UE 132. Specifically, the rendering component 706 operates to display both the received SMS 134 as well as the ads 150 on the screen 708. In the example discussed here, the association between SMS 134 and ads 150 is represented by the SMS ID discussed above. The secondary content reception component 704 may generally be adapted to receive item identifiers, such as the SMS ID, which allow associating a received primary content item with a secondary content item. As one example, the SMS ID may comprise the originating number of UE 130. In this case the rendering component 706 may compare the originating number received with the SMS ID with the originating number included in the SMS message 134, and may in this way determine that SMS 134 and ads 150 are to be presented in association with each other.

Generally, the SMS ID may be of any type. For example, the SMS ID may be an arbitrary number. In this case, it is useful to forward the SMS message 134 over the SMS analysis entity 136, as the SMS ID would then have to be forwarded via both transmission paths, i.e. has to accompany the SMS message 134 as well as the keyword message 146 and the ads 150. In this case, the SMS ID (more generally, any kind of item identifier identifying the primary content item to be augmented) necessarily has to be constructed at the point at which the transmission paths branch out from each other.

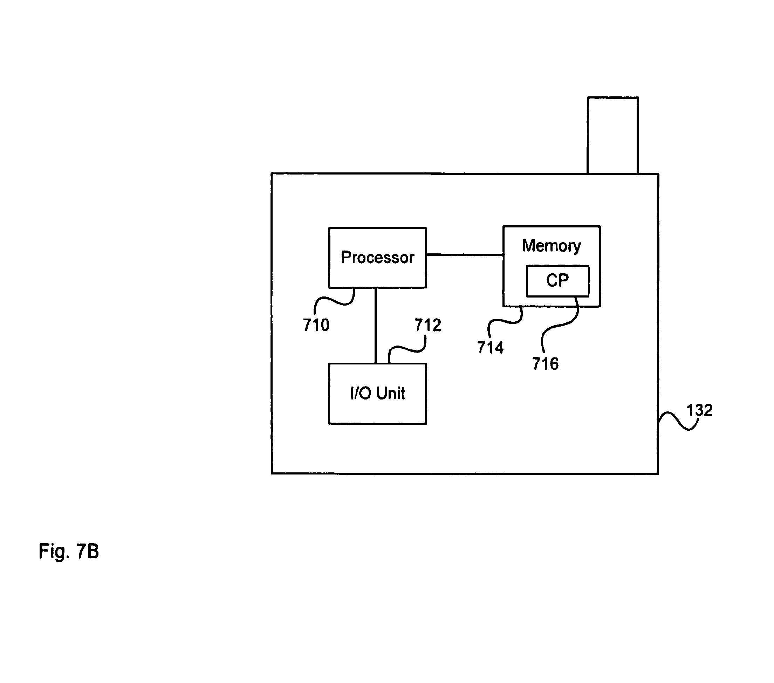

Fig. 7B illustrates functional components of a further embodiment of the UE 132 of Fig. 1. The UE 132 in Fig. 7B comprises a processor 710, an input/output unit (such as a keyboard/monitor combination) 712, a computer program product 714 in the form of a memory, e.g., a hard disk, ROM, flash memory, or EEPROM, and a computer program 716 stored therein. The computer program 716 comprises suitably programmed program modules corresponding to the functional components 702, 704 and 706 discussed above with reference to Fig. 7A. The computer program 716 causes the processor 710 to perform the steps illustrated in the flow diagram of Fig. 8.

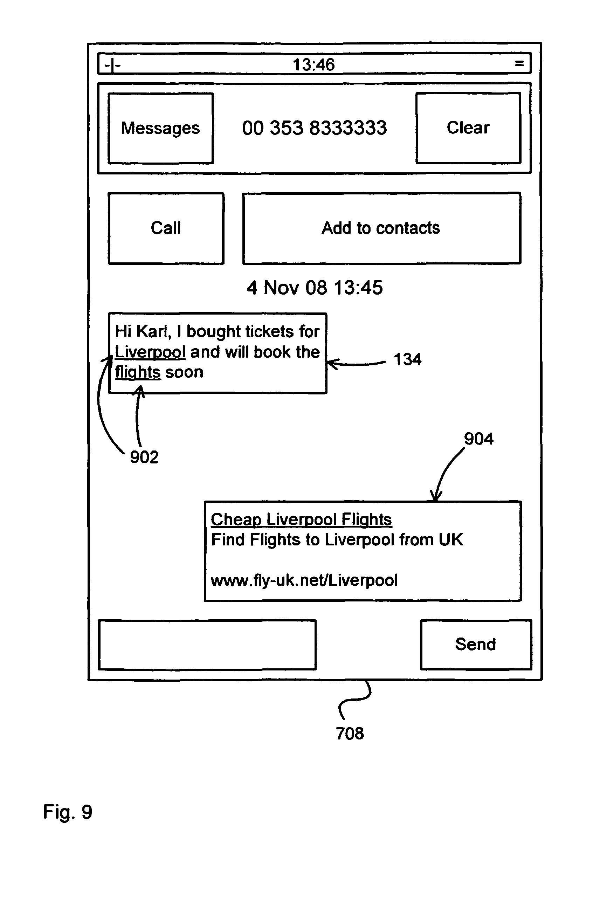

Fig. 9 illustrates an example of an associated presentation of the SMS message 134 and the ads 150 on the screen 708 of UE 132. The advertisements 150 comprise an inline advertisement 902 and an along-side advertisement 904. The inline advertisement 902 comprises a replacement of the words "Liverpool" and "flights" in the text of SMS message 134 by clickable weblinks/hypertext links. These links may point to the official website of the town Liverpool and to the website of an airline, for example. The along-side advertisement 904 is presented as a text box separate from the text of the SMS message 134. The ad 904 includes the words "Liverpool" and "flights" which have been identified by the SMS content entity 136 as keywords in the text of the SMS message 134 and, based thereupon, the ad 904 has been selected by the content provisioning server 138 as an appropriate ad.

The step 804 (S9) of downloading the advertisements 150 may comprise the download of presentation instructions causing the rendering component 706 to present SMS 134 and advertisements 150 in a manner as prescribed by the presentation instructions. Additionally or alternatively, the SMS user client 142 can be preconfigured, either at the time of manufacture of the UE 132 or afterwards via administrative action, for presenting inline and/or along-side advertisements on the screen 708. For example, the SMS user client 142 may be preconfigured to render ads, in the absence of downloadable instructions, in a manner as is commonly known from Web environments.

Referring back to the flow diagram of Fig. 8, in step 808 the SMS user client 142 transmits an indication of a user behaviour to the content provisioning server 138. An address of the content provisioning server 138 may have been provided in step 804 (S9) to the SMS user client 142, or the SMS user client 142 may provide the feedback to the content download server 140 which forwards it to the provisioning server 138. As an example for user feedback, in case the user has clicked on one of the ads 902 or 904, the SMS user client 142 may send a corresponding indication. Based on this kind of feedback, the content provisioning server 138 may mark the advertisement in the content repository 148 as 'clicked'. The number of times an advertisement has been marked as 'served' and as 'clicked' can then be used as a basis for calculating a click-through rate for the advertisement.

A network structure is proposed herein which enables content augmentation, i.e. the provision of secondary content in addition to primary content such as, for example, SMS/MMS messages, emails, etc., in a particularly flexible and efficient way. It is proposed to provide a network structure for the transmission of secondary content which is to a large extent independent of the network infrastructure for the transmission of the primary content. Thus, the interference of the transmission paths related to the primary content and the secondary content, respectively, is minimized.

In this way, each transmission path can be optimized independent of the other. In other words, the transmission of the primary content may not be disturbed in terms of transmission delay, presentation, etc., and the introduction of new content augmentation services may not require modifications on the existing network structure for the SMS/MMS delivery, email delivery, etc. Instead of putting the entire burden for the introduction of a new service on the SMS-GMSC, as in the conventional art, the functional entities involved in the primary content delivery may remain unmodified and therefore require less complexity and are less prone to errors.

The proposed network infrastructure also leads to a comparatively simple, fast, and cheap introduction of new content augmentation services. Moreover, as the secondary content is provided independently to the user terminal, any kind of associated presentation of primary and secondary content can be implemented, including a parallel or sequential presentation to the user. Still further, the proposed network structure also allows for an efficient implementation of feedback mechanisms.

While the current invention has been described in relation to its preferred embodiments, it is to be understood that this description is for illustrative purposes only. Accordingly, it is intended that the invention be limited only by the scope of the claims appended hereto.

## Claims

1. A method for controlling a transmission of content items to a user terminal (132, 612) via a mobile communications network (100,600) comprising a content provisioning server (138, 614, 618) and a content analysis entity (136, 608), the method being performed in the content provisioning server (138, 614, 618) and comprising the following steps:
- receiving (502) a content indicator (146) from the content analysis entity (136, 608) of the mobile communications network (100, 600), wherein the content indicator (146) is indicative of content of a first content item (134, 610) and comprises an item identifier (SMS ID) identifying the first content item (134, 610);
- determining (504) a second content item (150) based on the content indicator (146), wherein the second content item (150) is intended for an associated presentation with the first content item (134, 610) on the user terminal (132, 612); and
- transmitting (506) the second content item (150) in association with the item identifier (SMS ID) identifying the first content item (134, 610) towards the user terminal (132, 612), wherein a transmission path (S8, S9) of the second content item (150) in the mobile communications network (100, 600) is at least in part separate from a transmission path (S3) of the first content item (134, 610) towards the user terminal (132, 612).

2. The method according to claim 1,
wherein the step of transmitting the second content item (150) is performed independent of a transmission of the first content item (134, 610) in the mobile communications network (100,600).

3. The method according to claim 1 or 2,
wherein the second content item (150) is determined by matching stored keywords associated with the second content items (150) with keywords of the content indicator (146).

4. The method according to any one of the preceding claims,
wherein the second content item (150) is determined based on a geographical location of the user terminal (132, 612).

5. The method according to claim 4,
wherein the second content item (150) is determined based on if an intended presentation area of a content item covers the location of the mobile terminal.

6. A method for controlling a transmission of content items to a user terminal (132, 612) via a mobile communications network (100, 600) comprising a content provisioning server (138, 614, 618) and a content analysis entity (136, 608), the method being performed in the content analysis entity (136,608) and comprising the following steps:
- receiving (302) data representing content of a first content item (134, 610) from a network infrastructure (104) of the mobile communications network (100, 600);
- determining (304), based on the received data, a content indicator (146) indicative of the content of the first content item (134, 610), wherein the content indicator (146) comprises an item identifier (SMS ID) identifying the first content item (134, 610); and
- transmitting (306) the content indicator (146) to the content provisioning server (138, 614, 618) of the mobile communications network (100, 600) for providing a second content item (150) in association with the item identifier (SMS ID) to the user terminal (132,612) for an associated presentation with the first content item (134, 610) on the user terminal (132, 612), wherein a transmission path (S6) of the content indicator (146) is at least in part separate from a transmission path (S3) of the first content item (134, 610).

7. The method according to claim 6,
wherein the received data comprise at least one of a copy of content of the first content item (134, 610) and the content item itself.

8. The method according to claim 6 or 7,
wherein the determination step comprises parsing a text representing content of the first contentitem (134, 610) and correlating the parsed text with keywords in a keyword database (144).

9. The method according to any one of claims 6 to 8,
wherein the content indicator (146) comprises one or more keywords representing content of the first content item (134, 610).

10. The method according to any one of the preceding claims,
wherein the determined second content item (150) comprises one ore more adver-tisements.

11. The method according to any one of the preceding claims,
wherein the first content item (134, 610) is related to at least one of an SMS service, MMS service, email service and IMS service.

12. A computer program having computer executable instructions, which when executed on a content provisioning server (138, 614, 618) cause the content provisioning server (138, 614, 618) to perform the method according to any one of claims 1 to 5.

13. A computer readable medium having computer executable instructions, which when executed on a content analysis entity (136, 608) cause the content analysis entity (136, 608) to perform the method according to any one of claims 6 to 9.

14. A computer program product comprising a computer readable medium and the computer program according to one of claims 12and 13, the computer program being stored on the computer readable medium.

15. A content provisioning server (138,614,618) of a mobile communications network (100, 600) adapted for controlling a transmission of content items to a user terminal (132, 612), the content provisioning server (138, 614, 618) comprising:
- a reception component (402) adapted to receive a content indicator (146) indicative of content of a first content item (134, 610), wherein the content indicator (146) is received from a content analysis entity (136, 608) and comprises an item identifier (SMS ID) identifying the first content item (134, 610);
- a determination component (404) adapted to determine a second content item (150, 902, 904) based on the content indicator (146), wherein the second content item (150) is intended for an associated presentation with the first content item (134, 610) on the user terminal (132, 612); and
- a transmission component (406) adapted to transmit the second content item (150) in association with the item identifier (SMS ID) towards the user terminal (132, 612), wherein a transmission path (S8, S9) of the second content item (150) in the mobile communications network (100, 600) is at least in part separate from a transmission path (S3) of the first content item (134, 610) towards the user terminal (132, 612).

16. The content provisioning server of claim 15, wherein the transmission component (406) adapted to transmit the second content item (150) is further adapted to perform the transmission of the second content item (150) independent of a transmission of the first content item (134, 610) in the mobile communications network (100, 600).

17. A content analysis entity (136, 608) of a mobile communications network (100, 600) adapted for controlling a transmission of content items to a user terminal (132, 612), the content analysis entity (136, 608) comprising:
- a reception component (202) adapted to receive data representing content of a first content item (134, 610), wherein the data are received from a network infrastructure (104) of the mobile communications network (100, 600);
- a determination component (204) adapted to determine, based on the received data, a content indicator (146) indicative of the content of the first content item (134, 610), wherein the content indicator (146) comprises an item identifier identifying the first content item (134, 610); and
- a transmission component (206) adapted to transmit the content indicator (146) to a content provisioning server (138,614,618) of the mobile communications network (100,600) for providing a second content item (150) in association with the item identified (SMS ID) to the user terminal (132, 612) for an associated presentation with the first content item (134, 610) on the user terminal (132, 612), wherein a transmission path (S6) of the content indicator (146) is at least in part separate from a transmission path (S3) of the first content item (134, 610).

18. The content analysis entity of claim 17, wherein the reception component (202) is adapted to receive at least one of a copy of a content of the first content item (134,610) and the content item itself.

19. A node of a mobile communications network (100, 600), comprising a content provisioning server (138, 614, 618) according to claim 15 or 16 and a content analysis entity (136, 608) according to claim 17 or 18.

20. A mobile communications network (100, 600) comprising a first node (138, 614, 618) implementing a content provisioning server (138, 614, 618) according to claim 15 or 16 and a second node (136, 608) implementing a content analysis entity (136, 608) according to claim 17 or 18, wherein the first node and the second node are remote to each other.

## Patentansprüche

1. Verfahren zur Steuerung einer Übertragung von Inhaltselementen an ein Benutzerendgerät (132, 612) über ein Mobilkommunikationsnetz (100, 600), das einen Inhaltsbereitstellungsserver (138, 614, 618) und eine Inhaltsanalyseinstanz (136, 608) umfasst, wobei das Verfahren im Inhaltsbereitstellungsserver (138, 614, 618) durchgeführt wird und die folgenden Schritte umfasst:
- Empfangen (502) eines Inhaltsindikators (146) von der Inhaltsanalyseinstanz (136, 608) des Mobilkommunikationsnetzes (100, 600), wobei der Inhaltsindikator (146) Inhalt eines ersten Inhaltselements (134, 610) anzeigt und eine Elementkennung (SMS ID) umfasst, die das erste Inhaltselement (134, 610) identifiziert;
- Bestimmen (504) eines zweiten Inhaltselements (150) basierend auf dem Inhaltsindikator (146), wobei das zweite Inhaltselement (150) für eine verbundene Darstellung mit dem ersten Inhaltselement (134, 610) auf dem Benutzerendgerät (132, 612) bestimmt ist; und
- Senden (506) des zweiten Inhaltselements (150) in Verbindung mit der Elementkennung (SMS ID), die das erste Inhaltselement (134, 610) identifiziert, an das Benutzerendgerät (132, 612), wobei ein Übertragungsweg (S8, S9) des zweiten Inhaltselements (150) im Mobilkommunikationsnetz (100, 600) wenigstens teilweise von einem Übertragungsweg (S3) des ersten Inhaltselements (134, 610) zum Benutzerendgerät (132, 612) getrennt ist.

2. Verfahren nach Anspruch 1,
wobei der Schritt des Sendens des zweiten Inhaltselements (150) unabhängig von einer Übertragung des ersten Inhaltselements (134, 610) im Mobilkommunikationsnetz (100, 600) ausgeführt wird.

3. Verfahren nach Anspruch 1 oder 2,
wobei das zweite Inhaltselement (150) durch Vergleichen von gespeicherten Schlüsselwörtern, die mit den zweiten Inhaltselementen (150) assoziiert sind, mit Schlüsselwörtern des Inhaltsindikators (146) bestimmt wird.

4. Verfahren nach einem der vorhergehenden Ansprüche,
wobei das zweite Inhaltselement (150) basierend auf einem geografischen Aufenthaltsort des Benutzerendgeräts (132, 612) bestimmt wird.

5. Verfahren nach Anspruch 4,
wobei das zweite Inhaltselement (150) basierend darauf bestimmt wird, ob ein beabsichtigter Darstellungsbereich eines Inhaltselements den Aufenthaltsort des mobilen Endgeräts umfasst.

6. Verfahren zur Steuerung einer Übertragung von Inhaltselementen an ein Benutzerendgerät (132, 612) über ein Mobilkommunikationsnetz (100, 600), das einen Inhaltsbereitstellungsserver (138, 614, 618) und eine Inhaltsanalyseinstanz (136, 608) umfasst, wobei das Verfahren in der Inhaltsanalyseinstanz (136, 608) durchgeführt wird und die folgenden Schritte umfasst:
- Empfangen (302) von Daten, welche Inhalt eines ersten Inhaltselements (134, 610) darstellen, von einer Netzinfrastruktur (104) des Mobilkommunikationsnetzes (100, 600);
- Bestimmen (304) basierend auf den empfangenen Daten eines Inhaltsindikators (146), der den Inhalt des ersten Inhaltselements (134, 610) anzeigt, wobei der Inhaltsindikator (146) eine Elementkennung (SMS ID) umfasst, die das erste Inhaltselement (134, 610) identifiziert; und
- Senden (306) des Inhaltsindikators (146) an den Inhaltsbereitstellungsserver (138, 614, 618) des Mobilkommunikationsnetzes (100, 600) zum Bereitstellen eines zweiten Inhaltselements (150) in Verbindung mit der Elementkennung (SMS ID) für das Benutzerendgerät (132, 612) für eine verbundene Darstellung mit dem ersten Inhaltselement (134, 610) auf dem Benutzerendgerät (132, 612), wobei ein Übertragungsweg (S6) des Inhaltsindikators (146) wenigstens teilweise von einem Übertragungsweg (S3) des ersten Inhaltselements (134, 610) getrennt ist.

7. Verfahren nach Anspruch 6,
wobei die empfangenen Daten mindestens eine Kopie von Inhalt des ersten Inhaltselements (134, 610) und das Inhaltselement selbst umfassen.

8. Verfahren nach Anspruch 6 oder 7,
wobei der Bestimmungsschritt ein Parsen eines Textes, welcher Inhalt des ersten Inhaltselements (134, 610) darstellt, und Korrelieren der geparsten Textes mit Schlüsselwörtern in einer Schlüsselwörter-Datenbank (144) umfasst.

9. Verfahren nach einem der Ansprüche 6 bis 8,
wobei der Inhaltsindikator (146) ein oder mehrere Schlüsselwörter umfasst, welche Inhalt des ersten Inhaltselements (134, 610) darstellen.

10. Verfahren nach einem der vorhergehenden Ansprüche,
wobei das bestimmte zweite Inhaltselement (150) eine oder mehrere Werbungen umfasst.

11. Verfahren nach einem der vorhergehenden Ansprüche,
wobei das erste Inhaltselement (134, 610) mit mindestens einem von einem SMS-Dienst, MMS-Dienst, E-Mail-Dienst und IMS-Dienst in Beziehung steht.

12. Computerprogramm mit computerausführbaren Befehlen, welche bei Ausführung auf einem Inhaltsbereitstellungsserver (138, 614, 618) den Inhaltsbereitstellungsserver (138, 614, 618) veranlassen, das Verfahren nach einem der Ansprüche 1 bis 5 durchzuführen.

13. Computerprogramm mit computerausführbaren Befehlen, welche bei Ausführung auf einer Inhaltsanalyseinstanz (136, 608) die Inhaltsanalyseinstanz (136, 608) veranlassen, das Verfahren nach einem der Ansprüche 6 bis 9 durchzuführen.

14. Computerprogrammprodukt, umfassend ein computerlesbares Medium und das Computerprogramm nach einem der Ansprüche 12 und 13, wobei das Computerprogramm auf dem computerlesbaren Medium gespeichert ist.

15. Inhaltsbereitstellungsserver (138, 614, 618) eines Mobilkommunikationsnetzes (100, 600), der zum Steuern einer Übertragung von Inhaltselementen (132, 612) an ein Benutzerendgerät (132, 612) ausgelegt ist, wobei der Inhaltsbereitstellungsserver (138, 614, 618) umfasst:
- eine Empfangskomponente (402), die so ausgelegt ist, dass sie einen Inhaltsindikator (146) empfängt, welcher Inhalt eines ersten Inhaltselements (134, 610) anzeigt, wobei der Inhaltsindikator (146) von einer Inhaltsanalyseinstanz (136, 608) empfangen wird und eine Elementkennung (SMS ID) umfasst, die das erste Inhaltselement (134, 610) identifiziert;
- eine Bestimmungskomponente (404), die so ausleget ist, dass sie ein zweites Inhaltselement (150, 902, 904) basierend auf dem Inhaltsindikator (146) bestimmt, wobei das zweite Inhaltselement (150) für eine verbundene Darstellung mit dem ersten Inhaltselement (134, 610) auf dem Benutzerendgerät (132, 612) bestimmt ist; und
- eine Sendekomponente (406), die so ausgelegt ist, dass sie das zweite Inhaltselement (150) in Verbindung mit der Elementkennung (SMS ID) an das Benutzerendgerät (132, 612) sendet, wobei ein Übertragungsweg (S8, S9) des zweiten Inhaltselements (150) im Mobilkommunikationsnetz (100, 600) wenigstens teilweise von einem Übertragungsweg (S3) des ersten Inhaltselements (134, 610) zum Benutzerendgerät (132, 612) getrennt ist.

16. Inhaltsbereitstellungsserver nach Anspruch 15, wobei die Sendekomponente (406), die so ausgelegt ist, dass sie das zweite Inhaltselement (150) sendet, ferner so ausgelegt ist, dass sie die Übertragung des zweiten Inhaltselements (150) unabhängig von einer Übertragung des ersten Inhaltselements (134, 610) im Mobilkommunikationsnetz (100, 600) durchführt.

17. Inhaltsanalyseinstanz (136, 608) eines Mobilkommunikationsnetzes (100, 600), die zum Steuern einer Übertragung von Inhaltselementen an ein Benutzerendgerät (132, 612) ausgelegt ist, wobei die Inhaltsanalyseinstanz (136, 608) umfasst:
- eine Empfangskomponente (202), die so ausgelegt ist, dass sie Daten empfängt, welche Inhalt eines ersten Inhaltselements (134, 610) darstellen, wobei die Daten von einer Netzinfrastruktur (104) des Mobilkommunikationsnetzes (100, 600) empfangen werden;
- eine Bestimmungskomponente (204), die so ausgelegt ist, dass sie basierend auf den empfangenen Daten einen Inhaltsindikator (146) bestimmt, der den Inhalt des ersten Inhaltselements (134, 610) anzeigt, wobei der Inhaltsindikator (146) eine Elementkennung umfasst, die das erste Inhaltselement (134, 610) identifiziert; und
- eine Sendekomponente (206), die so ausgelegt ist, dass sie den Inhaltsindikator (146) zum Bereitstellen eines zweiten Inhaltselements (150) in Verbindung mit der Elementkennung (SMS ID) für das Benutzerendgerät (132, 612) für eine verbundene Darstellung mit dem ersten Inhaltselement (134, 610) auf dem Benutzerendgerät (132, 612) an einen Inhaltsbereitstellungsserver (138, 614, 618) des Mobilkommunikationsnetzes (100, 600) sendet, wobei ein Übertragungsweg (S6) des Inhaltsindikators (146) wenigstens teilweise von einem Übertragungsweg (S3) des ersten Inhaltselements (134, 610) getrennt ist.

18. Inhaltsanalyseinstanz nach Anspruch 17, wobei die Empfangskomponente (202) so ausgelegt ist, dass sie mindestens eine Kopie eines Inhalts des ersten Inhaltselements (134, 610) und das Inhaltselement selbst empfängt.

19. Knoten eines Mobilkommunikationsnetzes (100, 600), umfassend einen Inhaltsbereitstellungsserver (138, 614, 618) nach Anspruch 15 oder 16 und eine Inhaltsanalyseinstanz (136, 608) nach Anspruch 16 oder 18.

20. Mobilkommunikationsnetz (100, 600), umfassend einen ersten Knoten (138, 614, 618), der einen Inhaltsbereitstellungsserver (138, 614, 618) nach Anspruch 15 oder 16 implementiert, und einen zweiten Knoten (136, 608), der eine Inhaltsanalyseinstanz (136, 608) nach Anspruch 17 oder 18 implementiert, wobei der erste und der zweite Knoten voneinander entfernt sind.

## Revendications

1. Une méthode pour contrôler une transmission d'éléments de contenu vers un terminal utilisateur (132, 612) via un réseau de communications mobiles (100, 600) comprenant un serveur d'approvisionnement de contenu (138, 614, 618) et une entité d'analyse de contenu (136, 608), la méthode étant exécutée dans le serveur d'approvisionnement de contenu (138, 614, 618) et comprenant les étapes suivantes :
- la réception (502) d'un indicateur de contenu (146) depuis l'entité d'analyse de contenu (136, 608) du réseau de communications mobiles (100, 600), où l'indicateur de contenu (146) fournit des indications sur le contenu d'un premier élément de contenu (134, 610) et comprend un identifiant d'élément (ID de SMS) identifiant le premier élément de contenu (134, 610) ;
- la détermination (504) d'un deuxième élément de contenu (150) en se basant sur l'indicateur de contenu (146), dans laquelle le deuxième élément de contenu (150) est destiné à une présentation associée au premier élément de contenu (134, 610) sur le terminal utilisateur (132,612) ; et
- la transmission (506) du deuxième élément de contenu (150) associé à l'identifiant d'élément (ID de SMS) identifiant le premier élément de contenu (134, 610) vers le terminal utilisateur (132, 612), où un chemin de transmission (S8, S9) du deuxième élément de contenu (150) dans le réseau de communications mobiles (100, 600) est distinct au moins en partie d'un chemin de transmission (S3) du premier élément de contenu (134, 610) vers le terminal utilisateur (132, 612)

2. La méthode selon la revendication 1,
dans laquelle l'étape de transmission du deuxième élément de contenu (150) est exécutée indépendamment de la transmission du premier élément de contenu (134, 610) dans le réseau de communications mobiles (100, 600).

3. La méthode selon la revendication 1 ou 2,
dans laquelle le deuxième élément de contenu (150) est déterminé en mettant en correspondance des mots-clés mémorisés associés aux deuxièmes éléments de contenu (150) avec des mots-clés de l'indicateur de contenu (146).

4. La méthode selon une quelconque des revendications précédentes,
dans laquelle le deuxième élément de contenu (150) est déterminé en se basant sur une position géographique du terminal utilisateur (132, 612).

5. La méthode selon la revendication 4,
dans laquelle le deuxième élément de contenu (150) est déterminé en se basant sur si la position du terminal mobile est couverte ou non par une zone de présentation souhaitée.

6. Une méthode pour contrôler une transmission d'éléments de contenu vers un terminal utilisateur (132, 612) via un réseau de communications mobiles (100, 600) comprenant un serveur d'approvisionnement de contenu (138, 614, 618) et une entité d'analyse de contenu (136, 608), la méthode étant exécutée dans le serveur d'approvisionnement de contenu (136, 608) et comprenant les étapes suivantes :
- la réception (302) de données représentant une partie du contenu d'un premier élément de contenu (134, 610) depuis une infrastructure de réseau (104) du réseau de communications mobiles (100, 600) ;
- la détermination (304), en se basant sur les données reçues, d'un indicateur de contenu (146) fournissant des indications sur le contenu du premier élément de contenu (134, 610), dans lequel l'indicateur de contenu (146) comprend un identifiant d'élément (ID de SMS) identifiant le premier élément de contenu (134, 610) ; et
- la transmission (306) de l'indicateur de contenu (146) au serveur d'approvisionnement de contenu (138, 614, 618) du réseau de communications mobiles (100, 600) pour fournir un deuxième élément de contenu (150) associé à l'identifiant d'élément (ID de SMS) au terminal utilisateur (132, 612) dans le but d'effectuer une présentation associée au premier élément de contenu (134, 610) sur le terminal utilisateur (132, 612), où un chemin de transmission (S6) de l'indicateur de contenu (146) est distinct au moins en partie d'un chemin de transmission (S3) du premier élément de contenu (134, 610).

7. La méthode selon la revendication 6,
dans laquelle les données reçues comprennent au moins une copie d'une partie du contenu du premier élément de contenu (134, 610) et/ou l'élément de contenu lui-même.

8. La méthode selon la revendication 6 ou 7,
dans laquelle l'étape de détermination comprend l'analyse syntaxique d'un texte représentant une partie du contenu du premier élément de contenu (134, 610) et la corrélation du texte analysé avec des mots-clés dans une base de données de mots-clés (144).

9. La méthode selon une quelconque des revendications 6 à 8,
dans laquelle l'indicateur de contenu (146) comprend au moins un mot-clé représentant une partie du contenu du premier élément de contenu (134, 610).

10. La méthode selon une quelconque des revendications précédentes,
dans laquelle le deuxième élément de contenu déterminé (150) comprend une publicité ou plusieurs.

11. La méthode selon une quelconque des revendications précédentes,
dans laquelle le premier élément de contenu (134, 610) est apparenté à au moins un service parmi un service de SMS, un service de MMS, un service de messagerie électronique, et un service d'IMS.

12. Un programme d'ordinateur ayant des instructions informatiques exécutables, dont l'exécution sur un serveur d'approvisionnement de contenu (138, 614, 618) fait exécuter à ce serveur d'approvisionnement de contenu (138, 614, 618) la méthode selon une quelconque des revendications 1 à 5.

13. Un support lisible par ordinateur ayant des instructions exécutables par ordinateur, dont l'exécution sur une entité d'analyse de contenu (136, 608) fait exécuter à cette entité d'analyse de contenu (136, 608) la méthode selon l'une quelconque des revendications 6 à 9.

14. Un produit de programme d'ordinateur comprenant un support lisible par ordinateur et le programme d'ordinateur selon l'une quelconque des revendications 12 et 13, le programme d'ordinateur étant enregistré sur le support lisible par ordinateur.

15. Un serveur d'approvisionnement de contenu (138, 614, 618) d'un réseau de communications mobiles (100, 600) adapté pour contrôler la transmission d'éléments de contenu vers un terminal utilisateur (132, 612), le serveur d'approvisionnement de contenu (138, 614, 618) comprenant :
- un sous-système de réception (402) adapté pour recevoir un indicateur de contenu (146) fournissant des indications sur le contenu d'un premier élément de contenu (134, 610), dans lequel l'indicateur de contenu (146) est reçu depuis une entité d'analyse de contenu (136, 608) et comprend un identifiant d'élément (ID de SMS) identifiant le premier élément de contenu (134, 610) ;
- un sous-système de détermination (404) adapté pour déterminer un deuxième élément de contenu (150, 902, 904) en se basant sur l'indicateur de contenu (146), dans lequel le deuxième élément de contenu (150) est destiné à une présentation associée au premier élément de contenu (134, 610) sur le terminal utilisateur (132, 612) ; et
- un sous-système de transmission (406) adapté pour transmettre le deuxième élément de contenu (150) associé à l'identifiant d'élément (ID de SMS) vers le terminal utilisateur (132, 612), dans laquelle le chemin de transmission (S8, S9) du deuxième élément de contenu (150) dans le réseau de communications mobiles (100, 600) est distinct au moins en partie d'un chemin de transmission (S3) du premier élément de contenu (134, 610) vers le terminal utilisateur (132, 612).

16. Le serveur d'approvisionnement de contenu de la revendication 15, dans lequel le sous-système de transmission (406), adapté pour transmettre le deuxième élément de contenu (150), est en outre adapté pour effectuer la transmission du deuxième élément de contenu (150) indépendamment de la transmission du premier élément de contenu (134, 610) dans le réseau de communications mobiles (100, 600).

17. Une entité d'analyse de contenu (136, 608) d'un réseau de communications mobiles (100, 600) adaptée pour contrôler la transmission d'éléments de contenu vers un terminal utilisateur (132, 612), l'entité d'analyse de contenu (136, 608) comprenant :
- un sous-système de réception (202) adapté pour recevoir des données représentant une partie du contenu d'un premier élément de contenu (134, 610), dans lequel les données sont reçues depuis une infrastructure de réseau (104) du réseau de communications mobiles (100, 600) ;
- un sous-système de détermination (204) adapté pour déterminer, en se basant sur les données reçues, un indicateur de contenu (146) fournissant des indications sur le contenu du premier élément de contenu (134, 610), dans lequel l'indicateur de contenu (146) comprend un identifiant d'élément identifiant le premier élément de contenu (134, 610); et
- un sous-système de transmission (206) adapté pour transmettre l'indicateur de contenu (146) au serveur d'approvisionnement de contenu (138, 614, 618) du réseau de communications mobiles (100, 600) afin de fournir un deuxième élément de contenu (150) associé à l'identifiant d'élément (ID de SMS) au terminal utilisateur (132, 612) dans le but d'effectuer une présentation associée au premier élément de contenu (134, 610) sur le terminal utilisateur (132, 612), où un chemin de transmission (S6) de l'indicateur de contenu (146) est distinct au moins en partie d'un chemin de transmission (S3) du premier élément de contenu (134, 610).

18. L'entité d'analyse de contenu de la revendication 17, dans laquelle le sous-système de réception (202) est adapté pour recevoir une copie d'une partie d'un contenu du premier élément de contenu (134, 610) et/ou l'élément de contenu lui-même.

19. Un noeud d'un réseau de communications mobiles (100, 600) comprenant un serveur d'approvisionnement de contenu (138, 614, 618) selon la revendication 15 ou 16, et une entité d'analyse de contenu (136, 608) selon la revendication 17 ou 18.

20. Un réseau de communications mobiles (100, 600) comprenant un premier noeud (138, 614, 618) mettant en oeuvre un serveur d'approvisionnement de contenu (138, 614, 618) selon la revendication 15 ou 16, et un deuxième noeud (136, 608) mettant en oeuvre une entité d'analyse de contenu (136, 608) selon la revendication 17 ou 18, et dans lequel le premier noeud et le deuxième noeud sont distants l'un de l'autre.
